(19) Europäisches Patentamt
European Patent Office
Office européen des brevets

(11) Veröffentlichungsnummer: **0 087 616**
**B1**

(12) # EUROPÄISCHE PATENTSCHRIFT

(45) Veröffentlichungstag der Patentschrift: **05.02.86**

(51) Int. Cl.⁴: **C 09 B 29/039**, C 09 B 29/06 // D06P3/36

(21) Anmeldenummer: **83101132.5**

(22) Anmeldetag: **07.02.83**

(54) **Isothiazolazofarbstoffe.**

(30) Priorität: **16.02.82 DE 3205435**

(43) Veröffentlichungstag der Anmeldung: **07.09.83 Patentblatt 83/36**

(45) Bekanntmachung des Hinweises auf die Patenterteilung: **05.02.86 Patentblatt 86/6**

(84) Benannte Vertragsstaaten: **CH DE FR GB IT LI**

(56) Entgegenhaltungen:
**DE - A - 2 209 838**
**DE - A - 2 209 839**
**FR - A - 2 447 954**

**Die Akte enthält technische Angaben, die nach dem Eingang der Anmeldung eingereicht wurden und die nicht in dieser Patentschrift enthalten sind.**

(73) Patentinhaber: **BASF Aktiengesellschaft, Carl-Bosch-Strasse 38, D-6700 Ludwigshafen (DE)**

(72) Erfinder: **Bergmann, Udo, Dr., Merckstrasse 26, D-6100 Darmstadt (DE)**
Erfinder: **Dix, Johannes Peter, Dr., Ludwigshafener Strasse 125, D-6708 Neuhofen (DE)**
Erfinder: **Hansen, Guenter, Dr., Alwin-Mittasch-Platz 8, D-6700 Ludwigshafen (DE)**
Erfinder: **Schefczik, Ernst, Dr., Dubliner Strasse 7, D-6700 Ludwigshafen (DE)**
Erfinder: **Seybold, Guenther, Dr., Friedrich-Ebert-Strasse 14, D-6708 Neuhofen (DE)**

**EP 0 087 616 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

LIBER, STOCKHOLM 1986

**Beschreibung**

**Isothiazolazofarbstoffe**

Die Erfindung betrifft Verbindungen der allgemeinen For-mel I

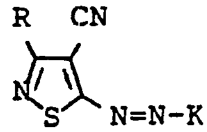

I,

in der
R ein Alkyl- oder gegebenenfalls substituierter Arylrest und
K ein Rest der Formel

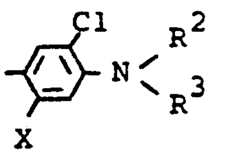 , 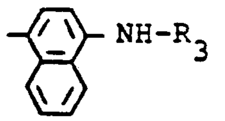 , 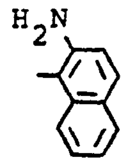 ,

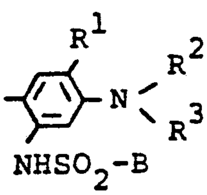 oder 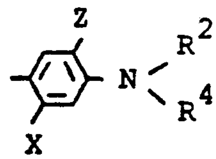

sind, wobei B $C_1$- bis $C_4$-Alkyl oder substituiertes Amino, $R^1$ Wasserstoff, Methyl, Methoxy oder Ethoxy, $R^2$ und $R^3$ unabhängig voneinander gegebenenfalls substi-tuiertes Alkyl,
$R^3$ darüberhinaus auch Wasserstoff,
$R^4$ ein Rest der Formel
-A-OCO-Y-R
Z Wasserstoff oder Methyl,
X Wasserstoff, Methyl, Methoxy, Chlor oder Acylamino sind und
A $C_2$- oder $C_3$-Alkylen und
Y -0- oder -NH- bedeuten.
Alkylreste R haben vorzugsweise 1 bis 8 C-Atome, im einzel-nen seien z. B. genannt:
Methyl, Ethyl, n-Propyl, i-Propyl, Butyl, Hexyl oder 2-Ethylhexyl.
Gegebenenfalls substituierte Arylreste R sind beispiels-weise:

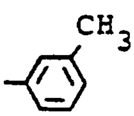 , 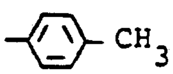 , 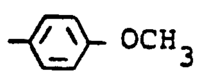 , 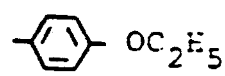 ,

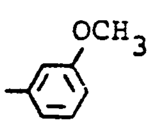 , 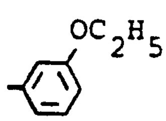 , 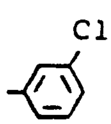 oder 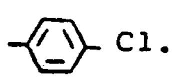 .

Als substituierte Aminoreste für B sind z. B. $N(CH_3)_2$,

$N(C_2H_5)_2$, 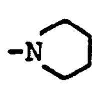 , 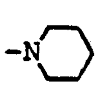 oder 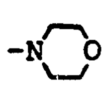 zu nennen.

Gegebenenfalls substituierte Alkylreste $R^2$ und $R^3$ sind z. B:
Alkyl mit 1 bis 4 Kohlenstoffatomen, das
durch Chlor, Brom, Cyan, Hydroxy, $C_1$- bis $C_4$-Alkoxy, Ben-zyloxy, Phenoxy, Phenyl, $C_1$- bis $C_4$-Alkylcarbonyloxy, das gegebenenfalls nochmals durch einen $C_1$- bis $C_4$-Alkoxy-, Phenoxy- oder Phenylrest substituiert sein kann, gegebe-nenfalls durch Cl, Br, $OCH_3$, $OC_2H_5$, $CH_3$ oder $C_2H_5$ sub-stituiertes Phenylcarbonyloxy, Oxycarbonyl, $C_1$- bis $C_4$-Alkoxycarbonyl, $C_1$- bis $C_4$-Alkoxycarbonyloxy, Carbamoyl,

Phenalkyloxycarbonyloxy, Phenoxyalkyloxycarbonyloxy, $C_1$- bis $C_4$-Alkoxyalkoxycarbonyloxy, gegebenenfalls durch Cl, Methoxy oder Methyl substituiertes Phenylaminocar-bonyloxy, gegebenenfalls durch $C_1$- bis $C_4$-Alkyl, $C_1$- bis $C_4$-Alkoxy, Chlor oder Brom substituiertes $C_1$- bis $C_4$-Alkylaminocarbonyloxy, $C_1$- bis $C_4$-Alkoxyalkoxycarbonyl oder Phenylalkyloxycarbonyl substituiert sein kann.

Einzelne Reste sind beispielsweise:

$CH_3$, $C_2H_5$, $C_3H_7$, $C_4H_9$, $C_2H_4Cl$, $C_2H_4CN$, $C_2H_4OH$, $CH_2-CHOH-CH_3$,

$CH_2-CHOH-C_2H_5$, 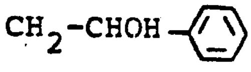, 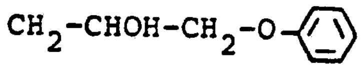,

$C_3H_6-OCH_3$, $C_2H_4OCH_3$, $C_2H_4OC_2H_5$, $C_2H_4OC_4H_9$, 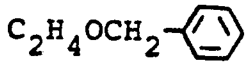,

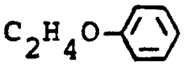, 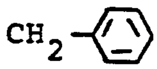, 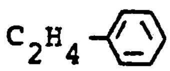, 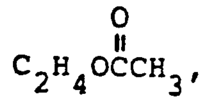, 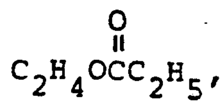,

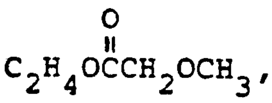, 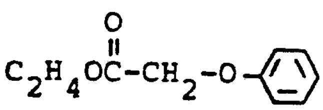, 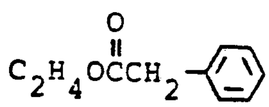,

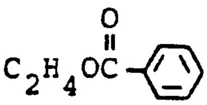, 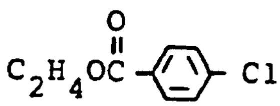, 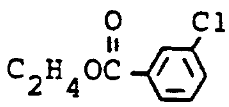, 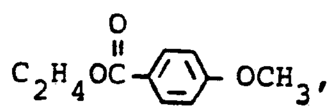,

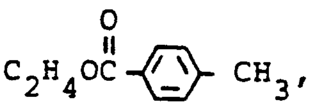, 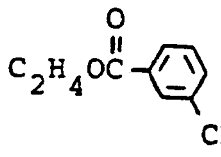, $C_2H_4COOH$, $C_2H_4COOCH_3$,

$C_2H_4COOC_2H_5$, $C_2H_4COOC_4H_9$, 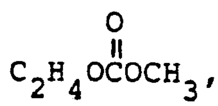, 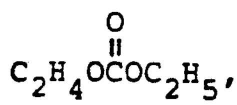,

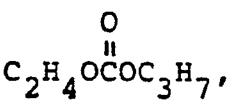, 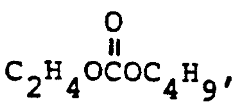, $C_2H_4CONH_2$, 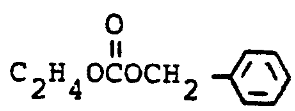,

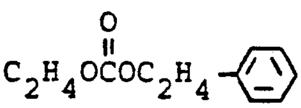, 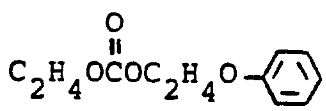, 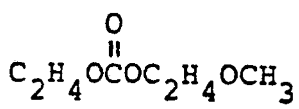,

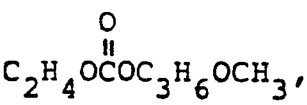, 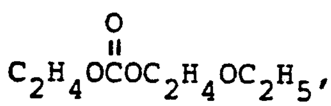, 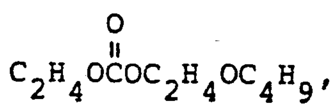,

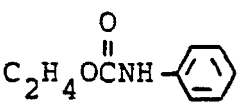, 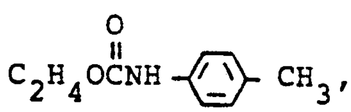, 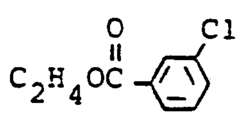,

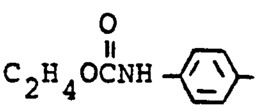, 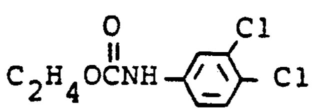, 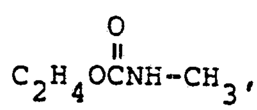,

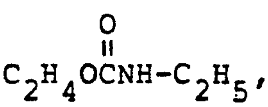, 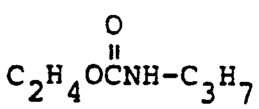, 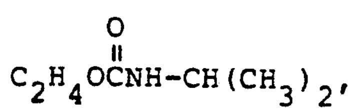,

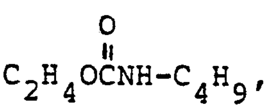, 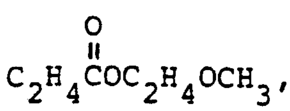, $C_2H_4COOC_2H_4OC_2H_5$,

$C_2H_4COOC_2H_4OC_4H_9$, $C_2H_4COOC_3H_6OCH_3$, $C_2H_4COOCH_2$-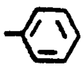,

$C_2H_4COOC_2H_4$-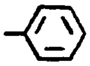 oder $C_2H_4COOC_2H_4OC_2H_4OCH_3$.

Für $R^4$ kommen im einzelnen z. B. die Reste der Formeln

$C_2H_4OCOOCH_3$, $C_2H_4O\overset{O}{C}OC_2H_5$, $C_2H_4O\overset{O}{C}OC_3H_7$, $C_2H_4O\overset{O}{C}OC_4H_9$,

$C_2H_4O\overset{O}{C}OC_2H_4OCH_3$, $C_2H_4O\overset{O}{C}OC_2H_4OC_2H_5$, $C_2H_4O\overset{O}{C}OC_3H_6OCH_3$,

$C_2H_4O\overset{O}{C}OC_2H_4OC_2H_4OCH_3$, $C_2H_4O\overset{O}{C}OC_2H_4O$-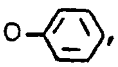, $C_2H_4O\overset{O}{C}OCH_2$-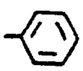,

$C_2H_4O\overset{O}{C}O-C_2H_4$-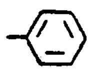, $C_2H_4O\overset{O}{C}OC_2H_4OC_2H_4OC_2H_5$, $C_2H_4O\overset{O}{C}OC_2H_4OC_4H_9$,

$C_2H_4O\overset{O}{C}NH-CH_3$, $C_2H_4O\overset{O}{C}NH-C_2H_5$, $C_2H_4O\overset{O}{C}NH-C_3H_7$,

$C_2H_4O\overset{O}{C}NH-CH(CH_3)_2$, $C_2H_4O\overset{O}{C}NH-C_3H_7$, $C_2H_4O\overset{O}{C}NH-C_4H_9$,

$C_2H_4O\overset{O}{C}NH-CH(CH_3)-C_2H_5$, $C_2H_4O\overset{O}{C}NH-CH_2$-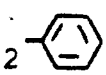,

$C_2H_4O\overset{O}{C}NH-C_2H_4$-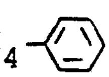, $C_2H_4O\overset{O}{C}NH-C_2H_4O$-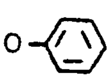, $C_2H_4O\overset{O}{C}NH$-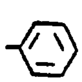

$C_2H_4O\overset{O}{C}NH$-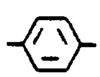-Cl, $C_2H_4O\overset{O}{C}NH$-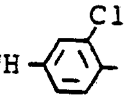Cl -Cl, $C_2H_4O\overset{O}{C}NH$-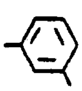 Cl

oder $C_2H_4O\overset{O}{C}NH$-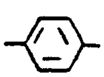-$CH_3$ in Betracht.

$R^2$ und $R^4$ können zusammen einen gesättigten heterocycli-schen Ring, z. B. einen Piperidin- oder Morpholinring, bil-den.

Acylaminoreste X sind z. B:

NH-CHO, $NHCOCH_3$, $NHCOC_2H_5$, NH-CO-Aryl, $NHCOCH_2$-Aryl,

$NHCOCH_2-O$-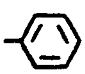 oder $CO-CH_2-O-CH_3$.

Zur Herstellung der Verbindungen der Formel I kann man eine Diazoniumverbindung von Aminen der Formel

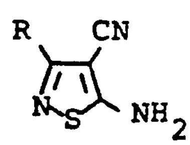

mit einer Kupplungskomponente der Formel

H-K

umsetzen.

Einzelheiten der Herstellung können den Beispielen ent-nommen werden, in denen sich Angaben über Teile und Pro-zente, sofern nicht anders vermerkt, auf das Gewicht be-ziehen.

Die Verbindungen der Formel I eignen sich zum Färben von Celluloseestern und insbesondere synthetischen Poly-estern; man erhält gelbe bis blaue Färbungen mit in der Regel sehr guten Echtheiten. Die Verwendung von Mischungen von Verbindungen der Formel I kann dabei vorteilhaft sein.

Von besonderer technischer Bedeutung sind Verbindungen der Formel I a

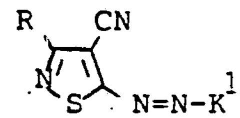 I a,

in der

$K^1$ ein Rest der Formeln

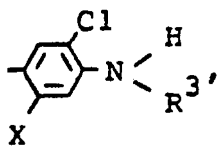, 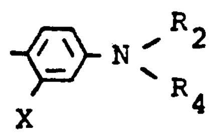 oder 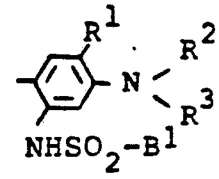 ist,

$B^1$ $C_1$ - bis $C_4$ -Alkyl bedeutet und R,
$R^1$, $R^2$, $R^3$, $R^4$ und X die angegebene Bedeutung haben.

Bevorzugt sind für

$R^1$: H, $CH_3$ oder $OCH_3$

$R^2$: $CH_3$, $C_2H_5$, $C_3H_7$, $C_4H_9$, $C_2H_4CN$, $C_2H_4OH$, $CH_2$-$CHOHCH_3$, $CH_2CHOHC_2H_5$, $C_3H_6OCH_3$, $C_2H_4OCH_3$, $C_2H_4OC_2H_5$, $C_2H_4OC_4H_9$, $C_2H_4OCH_2$-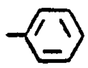, $C_2H_4O$-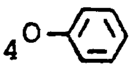, $CH_2$-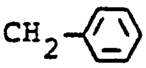, $C_2H_4$-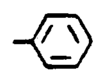, $C_2H_4COOCH_3$, $C_2H_4COOC_2H_5$, $C_2H_4COOC_4H_9$, $C_2H_4O\overset{O}{C}OCH_3$, $C_2H_4O\overset{O}{C}OC_2H_5$, $C_2H_4O\overset{O}{C}OC_3H_7$, $C_2H_4O\overset{O}{C}OC_4H_9$, $C_2H_4O\overset{O}{C}OC_2H_4OCH_3$, $C_2H_4O\overset{O}{C}OC_3H_6OCH_3$, $C_2H_4O\overset{O}{C}OC_2H_4OC_2H_5$, $C_2H_4O\overset{O}{C}NHCH_3$, $C_2H_4O\overset{O}{C}NHC_2H_5$, $C_2H_4O\overset{O}{C}NH-C_3H_7$, $C_2H_4O\overset{O}{C}NH-CH(CH_3)_2$, $C_2H_4O\overset{O}{C}NH-C_4H_9$, $C_2H_4COOC_2H_4OCH_3$, $C_2H_4COOC_2H_4OC_2H_5$, $C_2H_4COOC_2H_4OC_4H_9$, $C_2H_4COOC_3H_6OCH_3$, $C_2H_4COOCH_2$-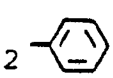 oder $C_2H_4COOC_2H_4$-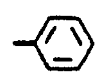.

**Beispiel 1**

7 Teile 5-Amino-4-cyan-3-methylisothiazol wurden in 75 Raumteilen eines Gemisches aus 17 Teilen Eisessig und 3 Teilen Propionsäure gelöst. Nach Zugabe von 20 Teilen 85 %iger Schwefelsäure ließ man bei 0 - 5 °C unter

Rühren langsam 16 Teile Nitrosylschwefelsäure (11,5 % $N_2O_3$) zu-laufen und 4 Stunden bei gleicher Temperatur rühren. Die so erhaltene Diazoniumsalzlösung ließ man in eine Mi-schung aus 11,2 Teilen N-Ethyl-N-methoxycarbonyloxethyl-anilin, 20 Raumteilen 32 proz. Salzsäure, 250 Teilen Was-ser, 250 Teilen Eis und einem Teil Amidosulfonsäure lang-sam einfließen. Nach Beendigung der Kupplung wurde der Farbstoff abgesaugt, neutral gewaschen und bei 50 °C im Vakuum getrocknet. Man erhielt 16,5 Teile des Farbstoffs der Formel

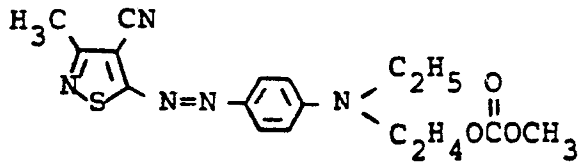,

der Polyesterfasern in klaren blaustichig roten Nuancen mit guten Echtheiten färbt.

**Beispiel 2**

Eine wie in Beispiel 1 bereitete Diazolösung aus 7 Teilen 5-Amino-4-cyan-3-methylisothiazol wurde zu einer Mischung aus 16 Teilen N-Ethyl-N,ß-phenylethoxycarbonyloxethyl-anilin, 30 Raumteilen 32 %iger Salzsäure, 250 Teilen Wasser und 250 Teilen Eis gegeben. Nach Beendigung der Kupplung wurde der Farbstoff abgesaugt, neutral gewaschen und bei 50 °C im Vakuum getrocknet.

Es wurden 18,8 Teile des Farbstoffs der Formel

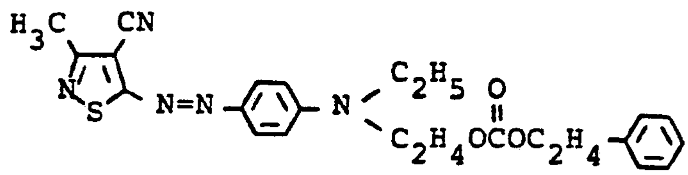

erhalten, der Polyester in blaustichig roten Nuancen an-färbt.

**Beispiel 3**

11,1 Teile N-Ethyl-N-propylaminocarbonyloxethylanilin in 10 Raumteilen Dimethylformamid und 20 Raumteilen Salz-säure (32 %ig) wurden zu einer Mischung aus 250 Teilen wasser, 250 Teilen Eis und einem Teil Amidosulfonsäure gegeben. Hierzu ließ man eine nach Beispiel 1 bereitete Diazoniumsalzlösung langsam zufließen. Nach Beendigung der Kupplung wurde abgesaugt, neutral gewaschen und bei 50 °C im Vakuum getrocknet. Es wurden 17,2 Teile des Farbstoffs der Formel

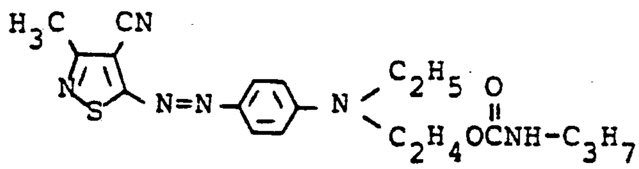

erhalten, der Polyester in klaren blaustichig roten Nuancen anfärbt.

**Beispiel 4**

14,2 Teile N-Ethyl-N-phenylaminocarbonyloxethylanilin in 8 Raumteilen Dimethylformamid und 30 Raumteilen Salzsäure wurden analog Beispiel 3 mit dem Diazoniumsalz aus 7 Tei-len 5-Amino-4-cyan-3-methylisothiazol gekuppelt. Man er-hielt nach Trocknung 20,3 Teile des Farbstoffs der Formel

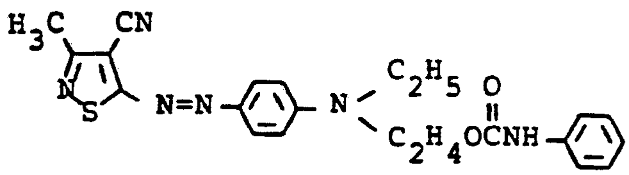,

der Polyesterfasern in blaustichig roten Nuancen färbt.

**Beispiel 5**

10,1 Teile 5-Amino-4-cyan-3-phenylisothiazol wurden in einem Gemisch aus 75 Raumteilen Eisessig/Propionsäure (Volumenverhältnis 17 : 3) und 20 Raumteilen 85 %iger Schwefelsäure bei 0 - 5 °C unter Rühren langsam mit 16 Teilen Nitrosylschwefelsäure (11,5 % $N_2O_3$) versetzt. Man ließ 4 Stunden bei dieser Temperatur rühren. Die so erhaltene Diazolösung wurde zu einer Mischung aus 15,7 Teilen 4-Chlor-3-methoxyethoxycarbonylethylamino-acetanilid, 30 Raumteilen 32 %iger Salzsäure, 250 Tei-len Eis, 250 Teilen Wasser und einem Teil Amidosulfon-säure zugetropft. Nach Beendigung der Kupplung wurde ab-gesaugt, neutral gewaschen und bei 50 °C im Vakuum ge-trocknet. Es wurden 21,9 Teile des Farbstoffs der Formel

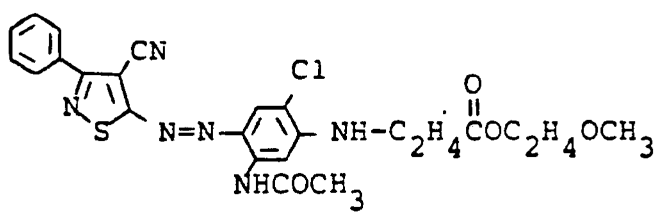

erhalten, der Polyester in blaustichig roten Nuancen mit guten Echtheiten anfärbt.

**Beispiel 6**

Eine wie in Beispiel 5 bereitete Diazoniumsalzlösung aus 10,1 Teilen 5-Amino-4-cyan-3-phenylisothiazol wurde zu einer Mischung aus 16,8 Teilen N-Cyanethyl-N-ethoxy-ethoxycarbonyloxethylanilin, 20 Raumteilen 32 %iger Salz-säure, 250 Teilen Wasser, 250 Teilen Eis und einem Teil Amidosulfonsäure zugetropft. Nach Beendigung der Kupp-lung wurde abgesaugt, neutral gewaschen und bei 50 °C im Vakuum getrocknet. Es wurden 21,3 Teile des Farbstoffs der Formel

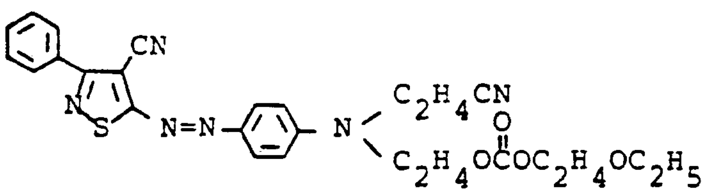

erhalten, der polyester in roten Nuancen mit guten Echt-heiten färbt.
Analog ließen sich folgende Verbindungen herstellen.

| Bsp. | R | K | Farbton auf Polyester |
|---|---|---|---|
| 7 | $CH_3$ | 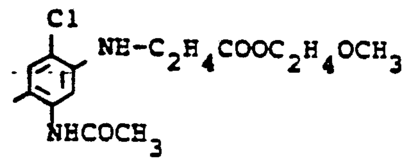 | blaustichig rot |
| 8 | " | 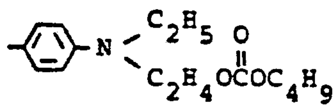 | " " |
| 9 | " | 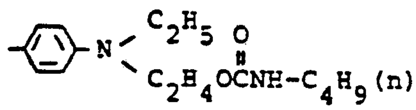 | " " |
| 10 | " | 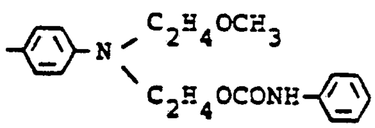 | " " |
| 11 | " | 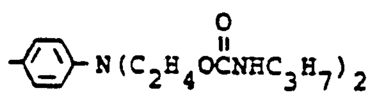 | " " |
| 12 | " | 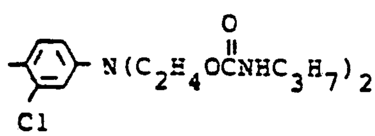 | " " |
| 13 | " | 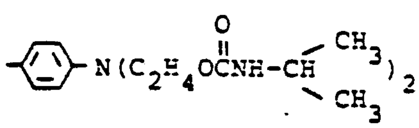 | " " |
| 14 | " | 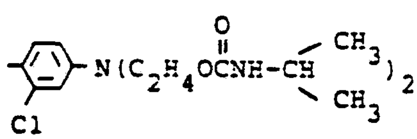 | " " |
| 15 | " | 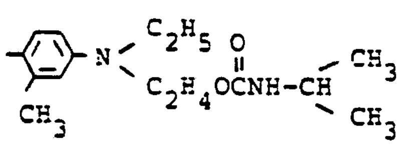 | violett |

| Bsp. | R | K | Farbton auf Polyester |
|---|---|---|---|
| 16 | $CH_3$ | 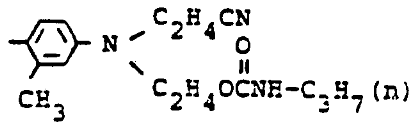 | rot |
| 17 | " | 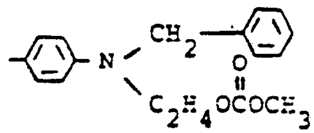 | " |
| 18 | " | 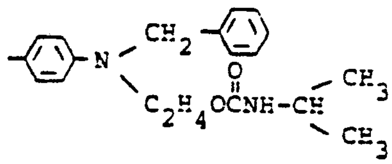 | blaustichig rot |
| 19 | " | 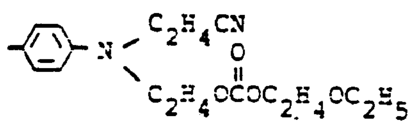 | gelbstichig rot |
| 20 | " | 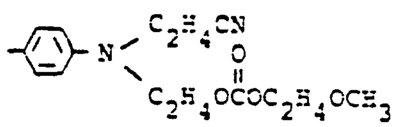 | " " |
| 21 | " | 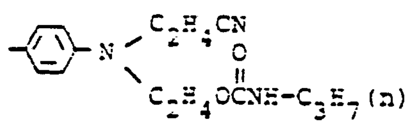 | " " |
| 22 | 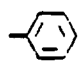 | 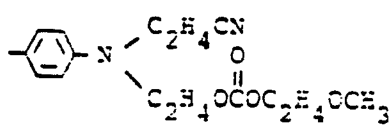 | " " |
| 23 | " | 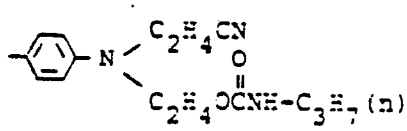 | " " |

| Bsp. | R | K | Farbton auf Polyester |
|---|---|---|---|
| 24 | 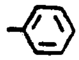 | 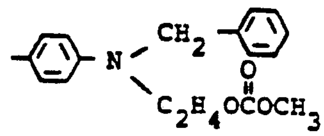 | rot |
| 25 | " | 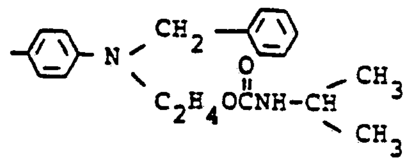 | blaustichig rot |
| 26 | " | 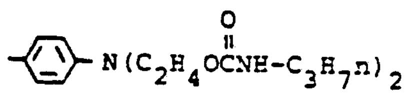 | " " |
| 27 | " | 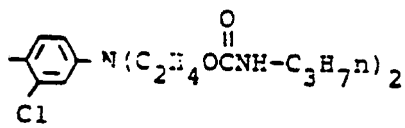 | " " |
| 28 | " | 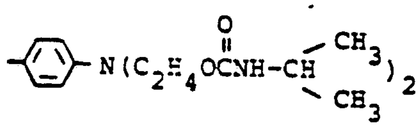 | " " |
| 29 | " | 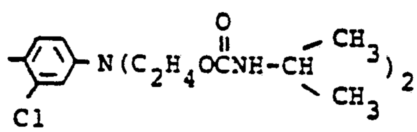 | " " |
| 30 | " | 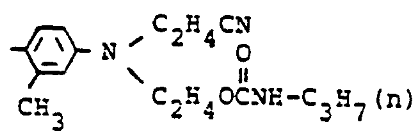 | rubin |
| 31 | " | 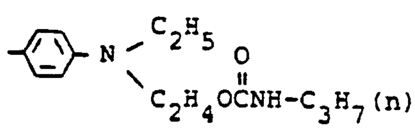 | " |

| Bsp. | R | K | Farbton auf Polyester |
|---|---|---|---|
| 32 | 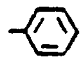 | 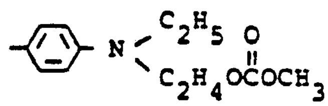 | blaustichig rot |
| 33 | " | 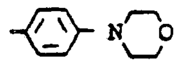 | rot |
| 34 | " | 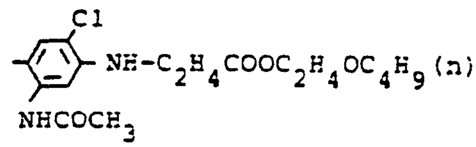 | blaustichig rot |
| 35 | " | 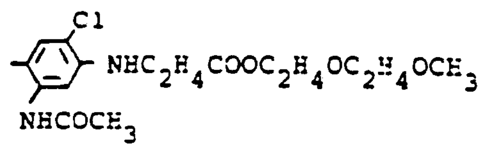 | " " |
| 36 | " | 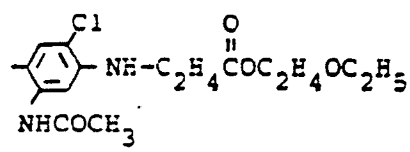 | " " |
| 37 | 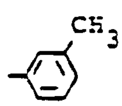 | 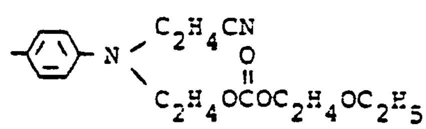 | gelbstichig rot |
| 38 | " | 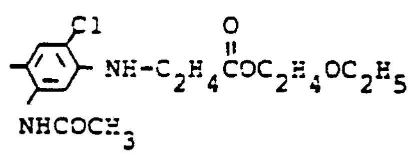 | rot |
| 39 | " | 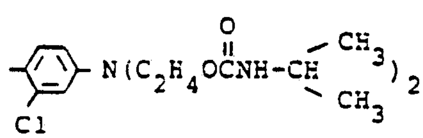 | blaustichig rot |

| Bsp. | R | K | Farbton auf Polyester |
|---|---|---|---|
| 40 | 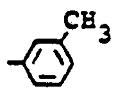 | 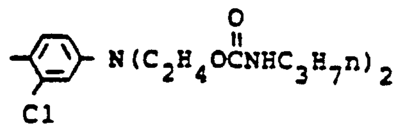 | blaustichig rot |
| 41 | " | 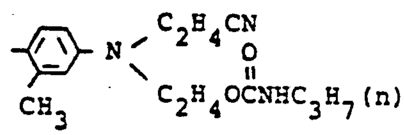 | rot |
| 42 | " | 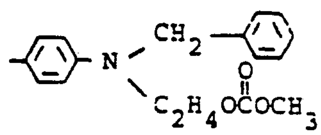 | " |
| 43 | " | 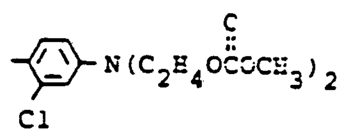 | " |
| 44 | " | 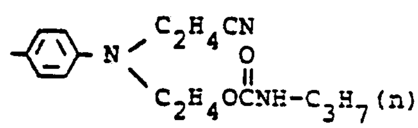 | gelbstichig rot |
| 45 | " | 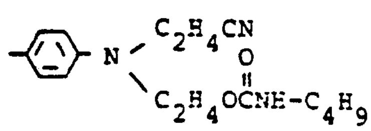 | " " |
| 46 | 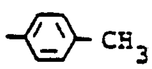 | 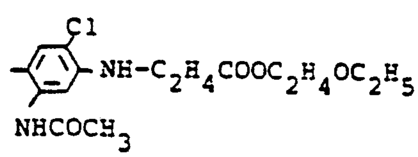 | rot |
| 47 | " | 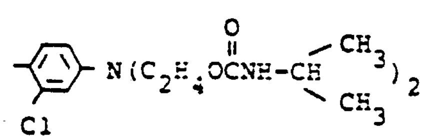 | blaustichig rot |

| Bsp. | R | K | Farbton auf Polyester |
|---|---|---|---|
| 48 | 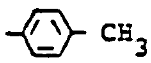 | 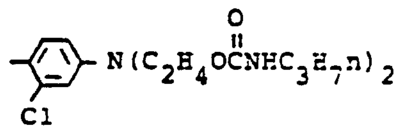 | blaustichig rot |
| 49 | " | 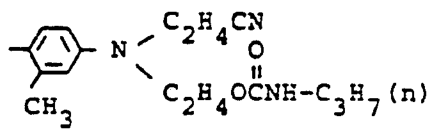 | " " |
| 50 | " | 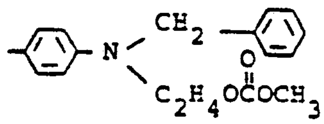 | rot |
| 51 | " | 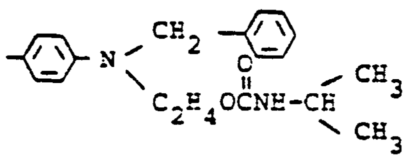 | blaustichig rot |
| 52 | " | 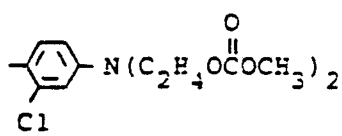 | rot |
| 53 | $CH_3$ | 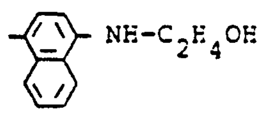 | blau |
| 54 | " | 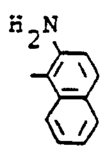 | rubin |
| 55 | " | 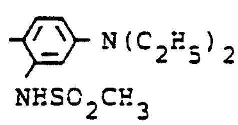 | violett |

| Bsp. | R | K | Farbton auf Polyester |
|---|---|---|---|
| 56 | $CH_3$ | 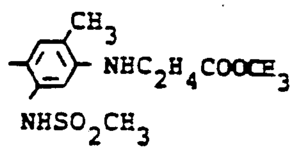 | rot |
| 57 | 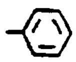 | 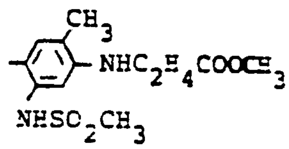 | blaustichig rot |
| 58 | " | 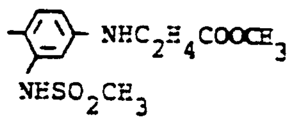 | rot |
| 59 | 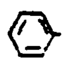 | 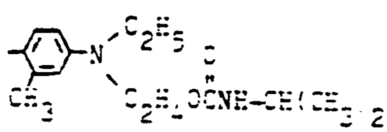 | violett |
| 60 | " | 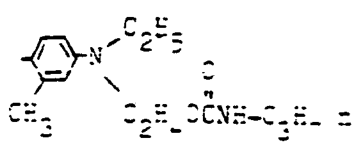 | " |
| 61 | " | 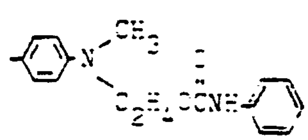 | " |

| Bsp. | R | K | Farbton aus Polyester |
|---|---|---|---|
| 62 | 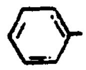 | 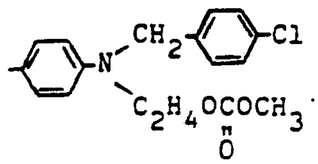 | blaustichig rot |
| 63 | " | 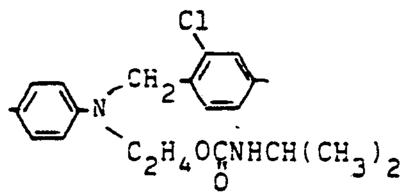 | " |
| 64 | " | 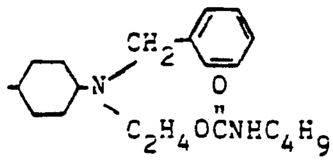 | " |
| 65 | " | 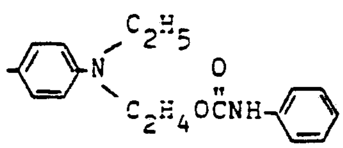 | violett |
| 66 | " | 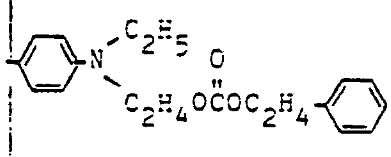 | " |

| Bsp. | R | K | Farbton auf Poly-ester |
|---|---|---|---|
| 67 | 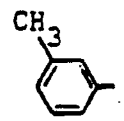 | 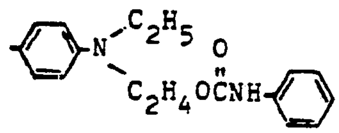 | violett |
| 68 | " | 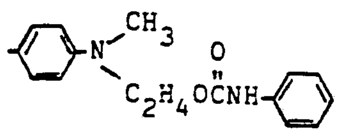 | " |
| 69 | " | 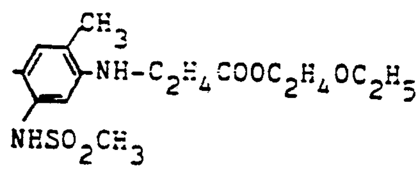 | blaustichig rot |
| 70 | $CH(CH_3)_2$ | 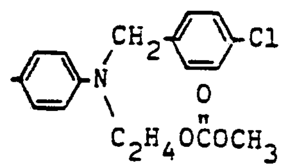 | rot |
| 71 | " | 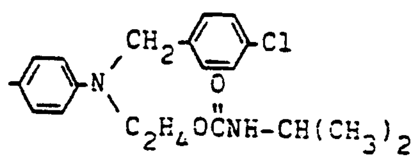 | " |
| 72 | " | 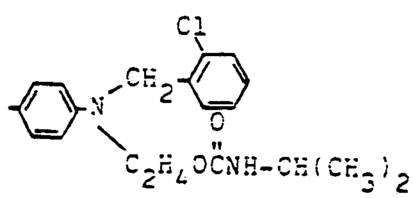 | " |

| Bsp. | R | K | Farbton auf Polyester |
|---|---|---|---|
| 73 | $CH(CH_3)_2$ | 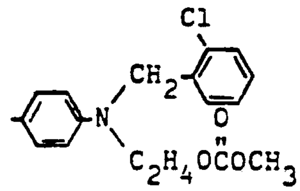 | rot |
| 74 | " | 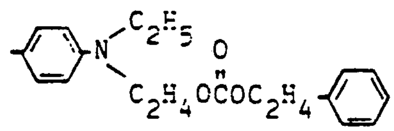 | blaustichig rot |
| 75 | " | 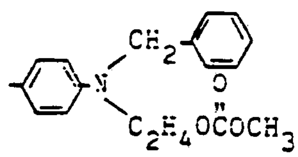 | rot |
| 76 | " | 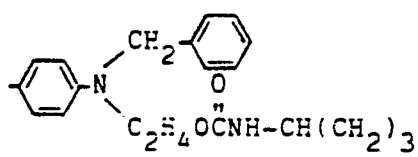 | rot |
| 77 | " | 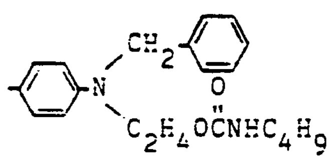 | rot |

| Bsp. | R | K | Farbton auf Polyester |
|---|---|---|---|
| 78 | $CH(CH_3)_2$ | 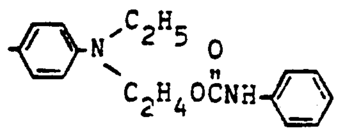 | blaustichig rot |
| 79 | " | 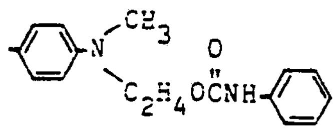 | " " |
| 80 | " | 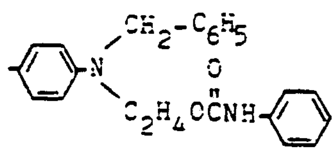 | rot |
| 81 | $CH_3$ | 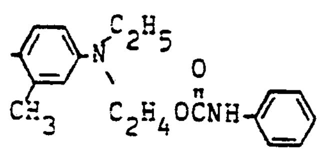 | violett |
| 82 | " | 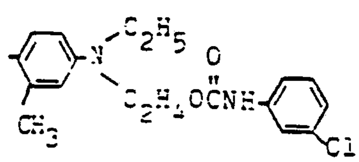 | " |

| Bsp. | R | K | Farbton auf Polyester |
|---|---|---|---|
| 83 | $CH_3$ | 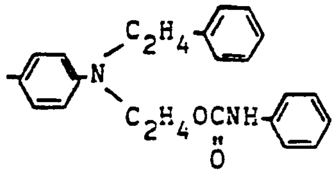 | blaustichig rot |
| 84 | " | 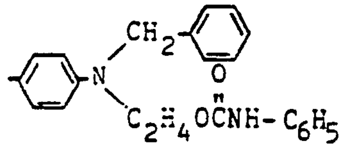 | " " |
| 85 | " | 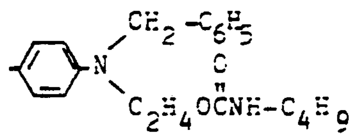 | " " |

**Patentansprüche**

1. Isothiazolazofarbstoffe der allgemeinen Formel

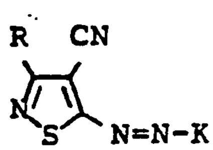

I,

in der
R ein Alkyl- oder gegebenenfalls substituierter Arylrest und
K ein Rest der Formel

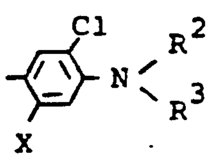 , 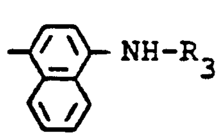 , 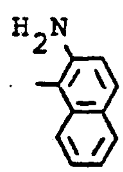 ,

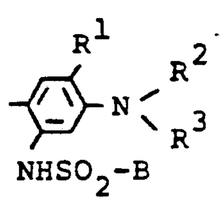 oder 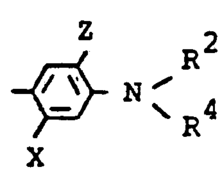

sind, wobei
B $C_1$- bis $C_4$-Alkyl oder substituiertes Amino,
$R^1$ Wasserstoff, Methyl, Methoxy oder Ethoxy,
$R^2$ und $R^3$ unabhängig voneinander gegebenenfalls substi-tuiertes Alkyl,

$R^3$ darüberhinaus auch Wasserstoff,
$R^4$ ein Rest der Formel
-A-OCO-Y-R
Z Wasserstoff oder Methyl,
X Wasserstoff, Methyl, Methoxy, Chlor oder Acylamino sind und
A $C_2$- oder $C_3$-Alkylen und
Y -O- oder -NH- bedeuten.
2. Farbstoffe gemäß Anspruch 1 der Formel

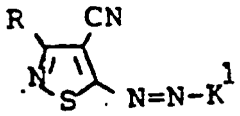

I a,

in der
$K^1$ ein Rest der Formeln

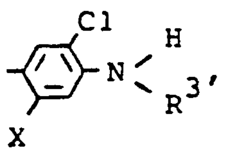 , 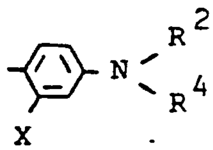 oder 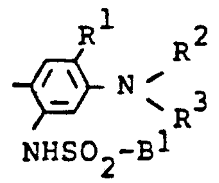 ist,

$B^1$ $C_1$- bis $C_4$-Alkyl bedeutet und
R, $R^1$, $R^2$, $R^3$, $R^4$ und X die angegebene Bedeutung haben.
3. Farbstoffe gemäß Anspruch 1, wobei
R Methyl, Ethyl, i-Propyl oder gegebenenfalls durch Methyl, Methoxy oder Chlor substituiertes Phenyl ist.
4. Farbstoffe gemäß Anspruch 2, wobei
$R^2$ geradkettiges oder verzweigtes $C_1$- bis $C_4$-Alkyl und
$R^3$ Wasserstoff, geradkettiges oder verzweigtes $C_1$-bis $C_4$-Alkyl oder durch Hydroxy, $C_1$- bis $C_4$-Alkanoyloxy, $C_1$- bis $C_4$-Alkoxycarbonyl, $C_1$-bis $C_4$-Alkoxycarbonyloxy, $C_1$- bis $C_4$-Alkylamino-carbonyloxy, Phenylaminocarbonyloxy, Chlorphenyl-aminocarbonyloxy, Cyan oder Phenyl substituiertes $C_1$- oder $C_4$-Alkyl sind.
5. Farbstoffe gemäß Anspruch 1 der Formel

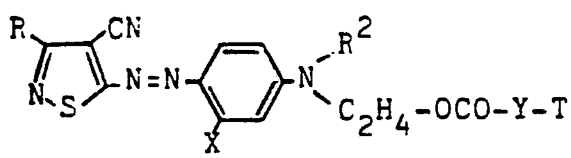

wobei
R Methyl, Ethyl, i-Propyl oder gegebenenfalls durch Methyl, Methoxy oder Chlor substituiertes Phenyl,
$R^2$ geradkettiges oder verzweigtes $C_1$- bis $C_4$-Alkyl oder Benzyl,
X Wasserstoff oder Methyl,
Y -0- oder -NH- und
T $C_1$- bis $C_4$-Alkyl, Phenyl oder Chlorphenyl sind.
6. Verwendung der Farbstoffe gemäß Anspruch 1 zum Färben und Bedrucken von Celluloseestern und synthetischen Polyestern.

## Revendications

1. Colorants azoïques d'isothiazole de formule générale

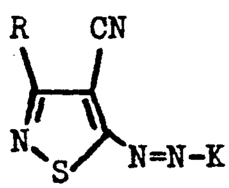

(I)

dans laquelle
R est un fadical alkyle ou un radical aryle eventuellement substitué et
K est un fadical de formule

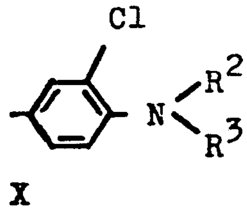,
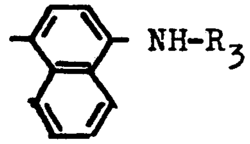,
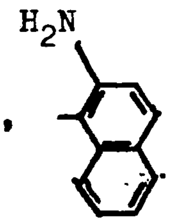,

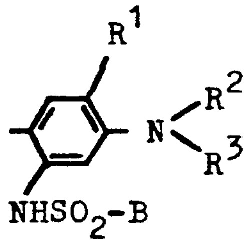 ou 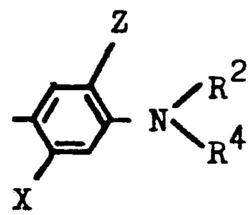

B représentant un radical alkyle en $C_1$ à $C_4$ ou un groupe amino substitué,
$R^1$ un atome d'hydrogène, un radical méthyle, méthoxy ou éthoxy, $R^2$ et $R^3$, indépendamment l'un de l'autre, des radicaux alkyle éventuellement substitués,
$R^3$ pouvant en outre représenter un atome d'hydrogène, $R^4$ un radical de formule
-A-OCO-Y-R
Z un atome d'hydrogène ou un radical méthyle, X un atome d'hydrogène, de chlore, un radical méthyle, méthoxy ou acylamino et
A représente un alkylène en $C_2$ ou $C_3$ et
Y est mis pour -O- ou -NH-

2. Colorants selon la revendication 1 de formule

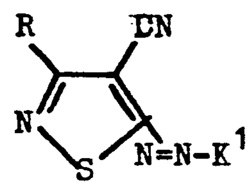 (Ia)

dans laquelle
$K^1$ est un radical de formule

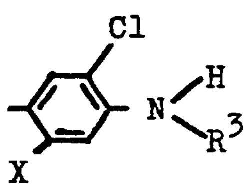, 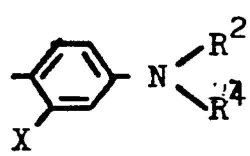 ou 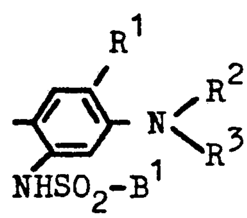

$B^1$ est un radical alkyle en $C_1$ à $C_4$ et
R, $R^1$, $R^2$, $R^3$, $R^4$ et X ont les significations dejà données.

3. Colorants selon la revendication 1, dans lesquels
R est un radical méthyle, éthyle, i-propyle ou phényle éven-tuellement substitué par un groupe méthyle, méthoxy ou un atome de chlore.

4. Colorants selon la revendication 2, dans lesquels
$R^2$ est un radical alkyle en $C_1$ à $C_4$ à chaîne droite ou ramifiée et
$R^3$ est un atome d'hydrogène, un radical alkyle en $C_1$ à $C_4$ à chaîne droite ou ramifiée ou un radical alkyle en $C_1$ ou $C_4$ substitué par un groupe hydroxy, alcanoyloxy en $C_1$ à $C_4$, alcoxycarbonyle en $C_1$ à $C_4$, alcoxycarbonyloxy en $C_1$ à $C_4$, alkylaminocarbonyloxy en $C_1$ à $C_4$, phenylaminocarbonyloxy, chloro-phénylaminocarbonyloxy, cyano ou phényle.

5. Colorants selon la revendication 1 de formule

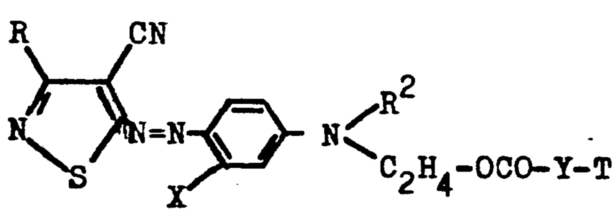

dans laquelle

R est un radical méthyle, éthyle, i-propyle ou phényle éventuellement substitué par un radical méthyle, méthoxy ou un atome de chlore,

$R^2$ est un radical alkyle en $C_1$ à $C_4$ à chaîne droite ou-ramifiée ou benzyle,

X est un atome d'hydrogène ou un radical méthyle, Y est mis pour -O- ou -NH- et

T est un radical alkyle en $C_1$ à $C_4$, phényle ou chlorophényle.

6. Utilisation des colorants selon la revendication 1 pour la teinture et l'impression d'esters de cellulose et de poly-esters synthétiques.

## Claims

1. An isothiazolylazo dye of the general formula

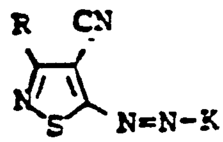

I,

where

R is alkyl or unsubstituted or substituted aryl, and

K is a radical of the formula

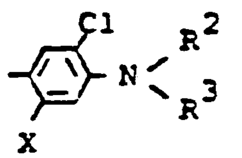 , 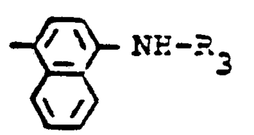 , 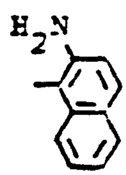 ,

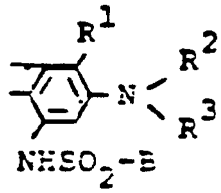 or 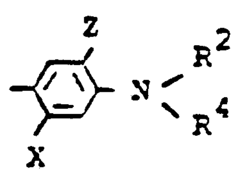 , where

B is $C_1$-$C_4$-alkyl or substituted amino,

$R^1$ is hydrogen, methyl, methoxy or ethoxy,

$R^2$ and $R^3$ independently of one another are unsubstituted or substituted alkyl,

$R^3$ may furthermore be hydrogen,

$R^4$ is a radical of the formula -A-OCO-Y-R,

Z is hyrogen or methyl,

X is hydrogen, methyl, methoxy, chlorine or acylamino,

A is $C_2$- or $C_3$-alkylene, and

Y is -O- or -NH-.

2. A dye as claimed in claim 1, of the formula

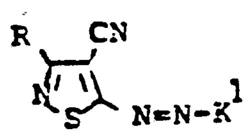

Ia,

where

$K^1$ is a radical of the formula

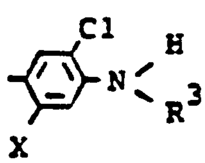 , 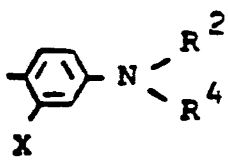 or 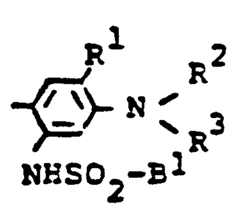 ,

$B^1$ is $C_1$-$C_4$-alkyl, and
R, $R^1$, $R^2$, $R^3$, $R^4$ and X have the above meanings.

3. A dye as claimed in claim 1, wherein
R is methyl, ethyl or i-propyl, or is phenyl which is unsubstituted or substituted by methyl, methoxy or chlorine.

4. A dye as claimed in claim 2, wherein
$R^2$ is straight-chain or branched $C_1$-$C_4$-alkyl, and
$R^3$ is hydrogen or straight-chain or branched $C_1$-$C_4$-alkyl, or is $C_1$- or $C_4$-alkyl which is substituted by hydroxyl, $C_1$-$C_4$-alkanoyloxy, $C_1$-$C_4$-alkoxycarbonyl, $C_1$-$C_4$-alkoxycarbonyloxy, $C_1$-$C_4$-alkylaminocarbonyloxy, phenylaminocarbonyloxy, chlorophenylaminocarbonyloxy, cyano or phenyl.

5. A dye is claimed in claim 1, of the formula

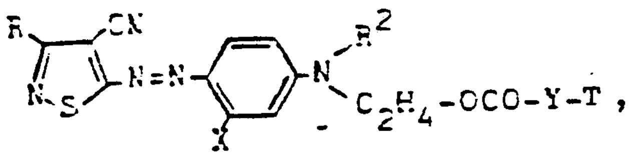

where
R is methyl, ethyl or i-propyl, or is phenyl which is unsubstituted or substituted by methyl, methoxy or chlorine,
$R^2$ is straight-chain or branched $C_1$-$C_4$-alkyl or benzyl,
X is hydrogen or methyl,
Y is -O- or -NH-, and
T is $C_1$-$C_4$-alkyl, phenyl or chlorophenyl.

6. The use of a dye as claimed in claim 1 for dyeing or printing cellulose esters and synthetic polyesters.